# EUROPÄISCHE PATENTSCHRIFT

(11) **EP 1 440 723 B1**
(45) Veröffentlichungstag und Bekanntmachung des Hinweises auf die Patenterteilung: **17.09.2008**
(21) Anmeldenummer: 03104897.8
(22) Anmeldetag: 22.12.2003
(51) Int. Cl.: B01D 45/12, F01M 13/04

(54) **Flüssigkeitsabscheider und Brennkraftmaschine**
Liquid separator and combustion engine
Séparateur de liquide et moteur à combustion

(30) Priorität: 14.01.2003 DE 10300977
(43) Veröffentlichungstag der Anmeldung: 28.07.2004
(73) Patentinhaber: MANN+HUMMEL GmbH, 71638 Ludwigsburg (DE)
(72) Erfinder: Hilpert, Torsten, 71729, Erdmannhausen (DE); Trautmann, Pius, Dr., 70499 Stuttgart (DE)

(56) Entgegenhaltungen:
- WO-A-98/29179
- DE-A- 3 541 204
- DE-B- 1 088 920
- FR-A- 2 804 477
- US-A- 2 889 007
- US-A- 4 175 937
- US-A- 5 261 380
- US-A- 6 109 250

## Beschreibung

Die Erfindung bezieht sich auf einen Flüssigkeitsabscheider und eine Brennkraftmaschine nach dem Oberbegriff des Anspruches 1.

In der Druckschrift DE 196 07 919 A1 wird ein Zentrifugal-Ölabscheider für die Entlüftungsgase aus dem Kurbelgehäuse einer Brennkraftmaschine beschrieben, welcher ein rotierendes Bauelement als Abscheider umfasst, das radial von außen von den Entlüftungsgasen angeströmt wird, wobei die Öltröpfchen in den Entlüftungsgasen an Strömungsblechen im rotierenden Bauelement abgeschieden und radial wieder nach außen zurückgeleitet werden. Das gereinigte Gas wird axial abgeleitet und in den Ansaugtrakt der Brennkraftmaschine geführt. Das rotierende Bauelement ist zylindrisch ausgebildet und umfasst eine Mehrzahl paralleler und rotierender Scheiben, zwischen denen Strömungskanäle mit zwischenliegenden Strömungsblechen gebildet sind. Um sicherzustellen, dass das Entlüftungsgas das rotierende Bauelement radial von außen nach innen durchströmen kann, muss ein Mindestdruckgefälle zwischen radialer Anströmungsseite und axialer Abströmseite sichergestellt sein. Dieses Druckgefälle kann jedoch üblicherweise ohne Zusatzpumpe nicht in allen Zuständen der Brennkraftmaschine aufgebracht werden. Außerdem benötigt das rotierende Bauelement in dem Abscheider eine zusätzliche Antriebsquelle.

Aus der US 4,175, 937 ist ein System zur Reinigung von Kurbelgehäuseentlüftungsgasen bekannt, das ein dreieckförmiges, umgekehrt V-förmiges Gehäuse besitzt. Beim Durchgang durch den Abscheider wird der Luftstrom durch Prallplatten umgelenkt, sodass es zur Abscheidung von Öltröpfchen aus den Kurbelgehäusegasen kommt.

Der Erfindung liegt das Problem zugrunde, mit einfachen Mitteln einen Flüssigkeitsabscheider zu schaffen, welcher ohne Energiezufuhr eine hohe Reinigungsleistung erbringt.

Dieses Problem wird erfindungsgemäß mit den Merkmalen des Anspruches 1 gelöst. Die Unteransprüche geben zweckmäßige Weiterbildungen an.

Der erfindungsgemäße Flüssigkeitsabscheider ist als Spiraltropfenabscheider ausgeführt und weist im Bereich der Einströmöffnung in das Gehäuse des Abscheiders zumindest eine Leitschaufel auf, die mit einer radial zur Gehäuseachse gerichteten Geraden einen Winkel einschließt, derart, dass das einströmende Gas nicht radial in das Gehäuse geleitet wird, sondern vielmehr auf eine spiralförmige Bahn in bzw. durch das Gehäuse gelenkt wird. Auf diese Weise wird der eintretenden Gasströmung eine Umfangsgeschwindigkeitskomponente aufgeprägt. Die im Gasstrom mitgeführten Tröpfchen werden durch die Zentrifugalkräfte nach außen gedrückt und können an der Innenwandung des Gehäuses oder an sonstigen Strömungsblechen, welche im Gehäuse angeordnet sind, abgeschieden werden. Das gereinigte Gas behält eine Umfangsgeschwindigkeitskomponente bei und bewegt sich weiter auf der Kreis- bzw. der Spiralbahn im Gehäuse, wird über die Abströmöffnung ausgeleitet und gegebenenfalls dem Ansaugtrakt der Brennkraftmaschine zugeführt. Die abgeschiedenen Flüssigkeitströpfchen können unter der Einwirkung ihrer Gewichtskraft an der Innenwandung des Gehäuses bzw. an den Strömungsblechen nach unten abfließen und über eine Flüssigkeitsaustragsöffnung aus dem Gehäuse abgeführt werden.

Das Gehäuse des Flüssigkeitsabscheiders ist konusförmig ausgebildet, wobei die Einströmöffnung, über die das ungereinigte Gas zugeführt wird, sich im unteren, breiten Rand des Gehäuses befindet, wohingegen die Abströmöffnung im Bereich der Konusspitze, also im oberen Teil des Gehäuses angeordnet ist. Das Gas wird im radial breitesten Bereich des Gehäuses eingeleitet und kann sich entlang der Innenwandung des konusförmigen Gehäuses spiralförmig bis zur zentral angeordneten Abströmöffnung nach oben bewegen (Potenzialwirbel). Die im Gas mitgeführten Tröpfchen werden bei der spiralförmigen Bewegung an der Innenwandung des konusförmigen Gehäuses abgeschieden und können entlang der Innenwandung nach unten abfließen. Zweckmäßig bilden die Einströmöffnungen, über die das ungereinigte Gas in das Gehäuse eingeleitet werden, zugleich auch die Flüssigkeitsaustragsöffnungen, über die herabströmende Flüssigkeit aus dem Gehäuse ausgeleitet wird. Über den Umfang des Gehäuses verteilt ist eine Mehrzahl von Einströmöffnungen und Leitschaufeln angeordnet. Auf diese Weise kann das Gas über den gesamten Umfang des Ölabscheiders in das Gehäuse eintreten.

Die Leitschaufeln sind zweckmäßig in sich gerade ausgebildet; gegebenenfalls kommen aber auch gekrümmte Leitschaufeln in Betracht, um dem einströmenden Gas in besserer Weise einen Drall aufprägen zu können, welcher die Strömung des Gases entlang einer Spiralbahn im Gehäuse unterstützt.

Vorteilhaft ist auch der Boden des Gehäuses konusförmig ausgebildet, wodurch dem einströmenden Gas eine vertikal gerichtete, axiale Strömungskomponente aufgeprägt wird. Bei einer Ausführung mit konusförmigem Gehäuse und konusförmigem Boden, die sich jeweils in die gleiche Richtung erheben, ist in Verbindung mit den winklig angeordneten Leitschaufeln sichergestellt, dass die einströmende Luft bereits bei ihrem Eintritt in das Gehäuse sowohl eine Umfangsgeschwindigkeitskomponente als auch eine axiale Komponente in Richtung Konusspitze besitzt, wodurch die Spiralbahn in besonderer Weise gefördert und unterstützt wird.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung eines Flüssigkeitsabscheiders in Seitenansicht,
- Fig. 2: der Flüssigkeitsabscheider in einer Ansicht von oben.

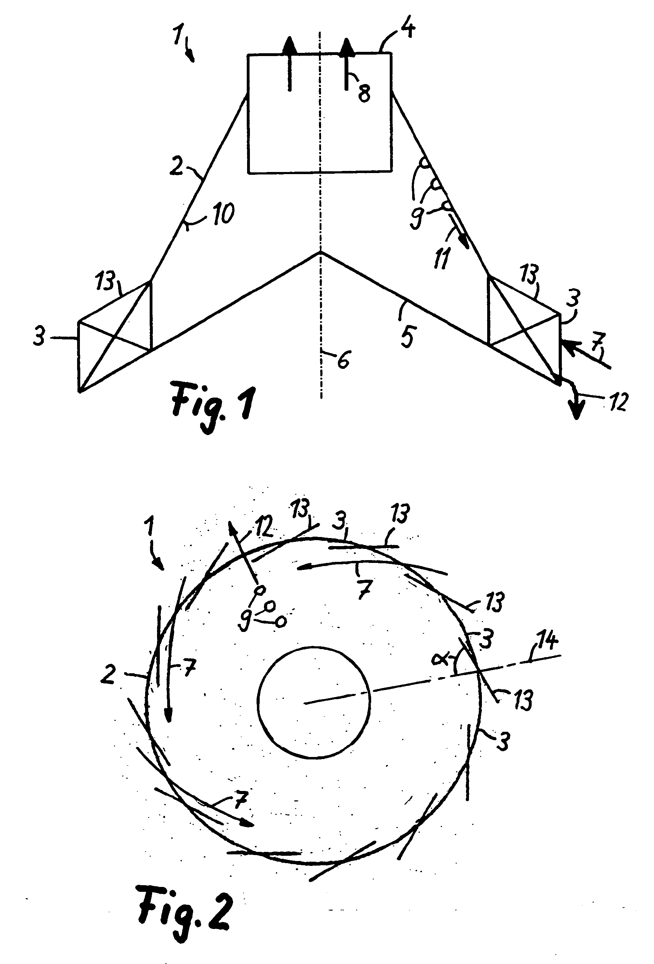

Bei dem in den Fig. 1 und 2 dargestellten Flüssigkeitsabscheider 1 handelt es sich um einen Abscheider zur Reinigung von einer Brennkraftmaschine zuzuführenden Verbrennungsluft, der insbesondere einem Luftfilter im Ansaugtrakt der Brennkraftmaschine vorgeschaltet ist und die zuzuführende Verbrennungsluft von flüssigen Bestandteilen reinigt. Es kommt auch eine Anwendung als Ölabscheider für die Entlüftungs- bzw. Kurbelgehäusegase einer Brennkraftmaschine in Betracht, wobei auch in diesem Fall zweckmäßig die gereinigten Entlüftungsgase in den Ansaugtrakt der Brennkraftmaschine geleitet werden. Darüber hinaus ist auch eine Anwendung für die Wasserabscheidung für die Ansaugluft einer Sekundärluftpumpe möglich.

Der Flüssigkeitsabscheider 1 besitzt ein konusförmiges Gehäuse 2, dem über Einströmöffnungen 3 das zu reinigende Gas zugeführt und dem über eine Abströmöffnung 4 das gereinigte Gas wieder entzogen wird. Das Gehäuse 2 besitzt einen Boden 5, welcher ebenfalls konusförmig ausgebildet ist und sich in der gleichen Richtung wie das Gehäuse 2 zur Gehäuselängsachse 6 hin erhebt, jedoch einen geringeren Konuswinkel aufweist als das Gehäuse 2. Die Einströmöffnungen 3 befinden sich im Bereich des größten Radius des konusförmigen Gehäuses 2 im unteren Abschnitt des Gehäuses. Das zu reinigende Gas wird dem Gehäuse 2 über die Einströmöffnungen 3 gemäß Pfeilrichtung 7 radial von außen - gegebenenfalls mit zusätzlicher axialer Komponente - zugeführt.

Über die Abströmöffnung 4 im Bereich der oberen Spitze des Gehäuses 2 wird das gereinigte Gas axial in Pfeilrichtung 8 aus dem Gehäuse abgeführt.

Innerhalb des Gehäuses 2 wird das einströmende Gas auf eine spiralförmig nach oben in Richtung Abströmöffnung 4 aufsteigende und sich verjüngende Bahn gelenkt, wobei während der spiralförmigen Bewegung des Gases Flüssigkeitspartikel 9 aus dem Gas an der Innenwandung 10 des Gehäuses 2 abscheiden können und in Pfeilrichtung 11 nach unten abströmen und gemäß Pfeilrichtung. 12 über die Gas-Einströmöffnungen 3 aus dem Gehäuse 2 ausgeleitet werden. In dieser Ausführung bildet das Gehäuse die Abscheideeinrichtung des Flüssigkeitsabscheiders.

Im Bereich der Einströmöffnungen 3 sind Leitschaufeln 13 angeordnet, die, wie Fig. 2 zu entnehmen, mit ihrer Leitschaufelebene gegenüber einer Radialen 14, die die Gehäuselängsachse schneidet, einen Winkel α einschließen, der weniger als 90° beträgt, zweckmäßig mindestens 45° beträgt und insbesondere zwischen 70° und 80° liegt. Die Leitschaufeln 13 sind an der Wandung des Gehäuses 2 angeordnet und erstrecken sich im Bereich der Einströmöffnungen 3 teilweise außerhalb und teilweise innerhalb des Gehäuses 2. Aufgrund der winkligen Anordnung der Leitschaufeln 13, welche auch gegenüber einer Tangente an den Umfang des Gehäuses einen Winkel einschließen, erfährt das in das Gehäuse über die Einströmöffnungen 3 einströmende Gas eine Umfangsgeschwindigkeitskomponente, wodurch eine Spiralbahn des eintretenden Gases innerhalb des Gehäuses unterstützt wird. Über den Umfang des Gehäuses verteilt sind eine Mehrzahl von Einströmöffnungen 3 angeordnet, wobei jede Einströmöffnung 3 von benachbarten Leitschaufeln 13 begrenzt ist, wodurch Einströmkanäle gebildet werden, die etwa in Umfangsrichtung des Gehäuses weisen.

Alternativ zu gerade ausgebildeten Leitschaufeln kommen auch gekrümmte Leitschaufeln in Betracht. In diesem Fall schließt eine Tangente an die Leitschaufeloberfläche im Bereich der Einströmöffnungen mit der Radialen einen Winkel ein.

## Patentansprüche

1. Flüssigkeitsabscheider und Brennkraftmaschine, mit einer Abscheideeinrichtung in einem Gehäuse (2) mit kreisförmigem Querschnitt, das eine Einströmöffnung (3) zum Einführen des zu reinigenden Gases und eine Abströmöffnung (4) zum Abführen des gereinigten Gases aufweist, wobei über den Umfang des Gehäuses (2) verteilt eine Mehrzahl von Einströmöffnungen (3) und Leitschaufeln (13) im Bereich der Einströmöffnung (3) angeordnet sind, die mit einer Radialen (14) zur Gehäuselängsachse (6) einen Winkel einschließen, und wobei das Gehäuse (2) konusförmig ausgebildet ist, wobei die Einströmöffnung (3) am unteren, breiten Rand des Gehäuses (2) und die Abströmöffnung (4) im Bereich der Konusspitze angeordnet ist, sodass das durch die Einströmöffnung (3) einzuführende Gas auf eine spiralförmige Bahn im Gehäuse (2) gelenkt wird, wobei der Flüssigabscheider Flüssigkeitspartikel aus der den Zylindereinlässen der Brennkraftmaschine zuzuführenden Verbrennungsluft abscheidet oder
Öl aus den Entlüftungsgasen des Kurbelgehäuses der Brennkraftmaschine abscheidet oder Wasser aus der Ansaugluft einer Sekundärluftpumpe der Brennkraftmaschine abscheidet.

2. Flüssigkeitsabscheider und Brennkraftmaschine nach Anspruch 1,
**dadurch gekennzeichnet,**
**dass** die Einströmöffnung (3) und die Leitschaufel (13) im Bereich der zylindrischen Außenwand des Gehäuses (2) angeordnet sind.

3. Flüssigkeitsabscheider und Brennkraftmaschine nach einem der vorhergehenden Ansprüche,
**dadurch gekennzeichnet,**
**dass** der Boden (5) des Gehäuses (2) konusförmig ausgebildet ist.

4. Flüssigkeitsabscheider und Brennkraftmaschine nach einem der vorhergehenden Ansprüche,
**dadurch gekennzeichnet,**
**dass** die in der Abscheideeinrichtung abgeschiedene Flüssigkeit über die
Einströmöffnung (3) abzuleiten ist.

## Claims

1. Liquid separator and internal combustion engine with a separating unit in a housing (2) with circular cross section which features an inflow opening (3) for introducing the gas to be cleaned and an outflow opening (4) for discharging the cleaned gas, a multitude of inflow openings (3) and guide blades (13) being disposed in the area of the inflow openings (3) which forms an angle in conjunction with a radial (14) in relation to the longitudinal axis (6) of the housing, and the housing (2) being designed in the shape of a cone, the inflow openings (3) being disposed at the lower large edge of the housing (2) and the outflow opening (4) in the area of the cone point so that the gas to be introduced through the inflow opening (3) is directed onto a spiral-shaped track in the housing (2), the liquid separator separating liquid particles from the combustion air that is introduced from the cylinder inlets to the internal combustion engine or separating oil from the ventilation gases of the internal combustion engine's crankcase or separating water from the intake air of a secondary-air pump of the internal combustion engine.

2. Liquid separator and internal combustion engine according to claim 1, **characterized in that** the inflow openings (3) and the guide blade (13) are disposed in the area of the cylindrical exterior wall of the housing (2).

3. Liquid separator and internal combustion engine according to one of the above claims, **characterized in that** the bottom (5) of the housing (2) is designed in the shape of a cone.

4. Liquid separator and internal combustion engine according to one of the above claims, **characterized in that** the liquid separated in the separating unit is to be discharged via the inflow opening (3).

## Revendications

1. Séparateur de liquide et moteur à combustion interne, avec un dispositif de séparation dans un carter (2) de section circulaire présentant une ouverture d'entrée (3) destinée à introduire le gaz à nettoyer et une ouverture de sortie (4) destinée à évacuer le gaz nettoyé, plusieurs ouvertures d'entrée (3) étant réparties sur le pourtour du carter (2) et des pales directrices (13) étant disposées dans la zone de l'ouverture d'entrée (3) et formant un angle avec une radiale (14) par rapport à l'axe longitudinal du carter (6) et le carter (2) étant réalisé en forme de cône, les ouvertures d'entrée (3) étant disposées sur le large bord inférieur du carter (2) et l'ouverture d'évacuation (4) étant disposée dans la zone de la pointe du cône de telle sorte que le gaz devant être introduit par l'ouverture d'entrée (3) soit dirigé sur une trajectoire en forme de spirale dans le carter (2), le séparateur de liquide séparant des particules de liquide de l'air de combustion devant être amené des admissions de cylindres au moteur à combustion interne ou séparant de l'huile des gaz de purge d'air du carter de vilebrequin du moteur à combustion interne ou séparant de l'eau de l'air d'aspiration d'une pompe à air secondaire du moteur à combustion interne.

2. Séparateur de liquide et moteur à combustion interne selon la revendication 1, **caractérisé en ce que** les ouvertures d'entrée (3) et la pale directrice (13) sont disposées dans la zone de la paroi extérieure cylindrique du carter (2).

3. Séparateur de liquide et moteur à combustion interne selon une des revendications précédentes, **caractérisé en ce que** le fond (5) du carter (2) est réalisé en forme de cône.

4. Séparateur de liquide et moteur à combustion interne selon une des revendications précédentes, **caractérisé en ce que** le liquide séparé dans le dispositif de séparation doit être évacué par l'ouverture d'entrée (3).
